# EUROPÄISCHE PATENTSCHRIFT

(11) **EP 2 609 174 B1**
(45) Veröffentlichungstag und Bekanntmachung des Hinweises auf die Patenterteilung: **18.03.2015**
(21) Anmeldenummer: 11748580.5
(22) Anmeldetag: 16.08.2011
(51) Int. Cl.: C10B 27/06, C10B 41/08, F16K 3/03

(54) **VORRICHTUNG UND VERFAHREN ZUR REGELUNG DES KAMMERDRUCKES VON KOKSOFENKAMMERN EINER KOKSOFENBATTERIE MIT HILFE VON EINSTELLBAREN BLENDEN AN DEN STEIGROHRKRÜMMERMÜNDUNGEN IN DIE ROHGASVORLAGE**
DEVICE AND METHOD FOR REGULATING THE CHAMBER PRESSURE OF COKING CHAMBERS OF A COKE-OVEN BATTERY USING ADJUSTABLE DIAPHRAGMS AT THE ASCENDING PIPE ELBOW OPENINGS INTO THE RAW GAS RECEIVERS
DISPOSITIF ET PROCÉDÉ DE RÉGLAGE DE LA PRESSION DE CHAMBRES DE FOUR À COKE D'UNE BATTERIE DE FOURS À COKE À L'AIDE D'OBTURATEURS RÉGLABLES DISPOSÉS SUR LES BOUCHES DE RACCORDS COUDÉS DE CONDUITES MONTANTES DANS LE COLLECTEUR DE GAZ BRUT

(30) Priorität: 23.08.2010 DE 102010035154
(43) Veröffentlichungstag der Anmeldung: 03.07.2013
(73) Patentinhaber: ThyssenKrupp Industrial Solutions AG, 45143 Essen (DE)
(72) Erfinder: KREBBER, Frank, 45130 Essen (DE); HUHN, Friedrich, 40882 Ratingen (DE)
(74) Vertreter: ThyssenKrupp AG - IP Services
(86) Internationale Anmeldenummer: PCT/EP2011/004112
(87) Internationale Veröffentlichungsnummer: WO 2012/031667

(56) Entgegenhaltungen:
- DE-A1- 10 002 529
- DE-A1-102007 016 947
- JP-A- 2004 107 466
- US-A- 4 094 492

## Beschreibung

Die Erfindung betrifft eine Vorrichtung zur Regelung des Kammerdruckes von Koksofenkammern einer Koksofenbatterie mit Hilfe von einstellbaren Irisblenden oder Irisdüsen an den Steigrohrkrümmermündungen in die Rohgasvorlage. Durch die Vorrichtung lässt sich der Gasstrom, der von dem Gasraum einer Koksofenkammer in die Rohgasvorlage strömt, in die Rohgasvorlage in der Durchlässigkeit regeln, so dass durch diese Regelung der Druck in dem Gasraum der Koksofenkammer regelbar ist. Die Erfindung betrifft auch ein Verfahren zur Regelung des Gasstromes aus dem Gasraum einer Koksofenkammer, wobei durch diese Regelung der Druck in der Koksofenkammer geregelt wird.

Bei der Herstellung von Koks bilden sich während der Verkokung Koksofengase, die zu einer Drucksteigerung in dem Gasraum der Koksofenkammer führen. Der Druck in dem Gasraum hängt ganz wesentlich auch vom Fortschritt des Verkokungsvorganges ab, so dass sich in dem Gasraum, abhängig von der Bauart der Koksöfen, ein erheblicher Druck aufbauen kann. Aus diesem Grund wird in Koksöfen konventioneller Bauart bei Verwendung einer Kammerdruckregelung das Verkokungsgas in eine Rohgasvorlage überführt, die Unterdruck führt und das Verkokungsgas zur Weiterverwendung absaugt. Die Rohgasvorlage besitzt in der Regel einen gewissen Wasserstand, da die aus der Koksofenkammer kommenden Rohgase zur Gaswäsche mit Wasser beaufschlagt werden. Auch können auf diese Weise Partikel oder mitgeführte Verunreinigungen abgefangen und abtransportiert werden.

Der Gasfluss aus der Koksofenkammer in die Rohgasvorlage wird über ein Steigrohr ausgeführt, welches in einer typischen Ausführungsform in einen Krümmer übergeht und anschließend über ein vertikales Zwischenstück in die Rohgasvorlage übergeht. In den Krümmer und das Zwischenstück zur Rohgasvorlage wird zur Wäsche Wasser eingespeist oder eingedüst. Zur Regelung des Drucks muss deshalb gewährleistet sein, dass das Wasser permanent abgeführt wird oder zumindest periodisch abgeführt werden kann.

Die EP 649455 B1 beschreibt ein Verfahren zum Regeln oder Steuern des Gasdruckes einer Koksofenbatterie, bei dem ein tassenförmiges, mit Wasser befüllbares Drosselorgan entsprechend dem Druckverlauf bei der Gasbildung der zu verkokenden Kohle betätigt wird, wobei die Drosselung für jeden einzelnen Ofen mit einer Wasserstandshöheneinstellung in dem Drosselorgan in Abhängigkeit von den tatsächlichen Druckverhältnissen in der jeweiligen Koksofenkammer derart erfolgt, dass je nach gewünschtem Gasdruck in der Koksofenkammer die Wasserstandhöhe in Abhängigkeit vom Wasserabfluß und dem Wasserzufluß in das tassenförmige Drosselorgan oder in Abhängigkeit einer vorgebbaren Überlaufhöhe eingestellt wird. Der Gasdruck wird über eine Schwenktasse geregelt, die eine oder mehrere Wasserabflußöffnungen zwischen Tassenboden und Tassenrand aufweist, unter einem Steigrohrkrümmer angeordnet ist und die Schwenktasse mit einer Kohlewasserleitung mit Ventil, das über Stellantriebe und Rechner mit Druckmessstellen verbunden ist, mit Wasser unterschiedlich beaufschlagbar ausgebildet ist. Das Verfahren hat den Nachteil, dass die Regelung des Ofendruckes mittels eines veränderlichen Wasserstandes in einer Tauchtasse erfolgt, so dass die Regelung des Wasserstandes von dem Volumenstrom an Vorlagenspülflüssigkeit abhängig ist, welcher der Tauchtasse über die entsprechenden Wasserzufuhrdüsen zugeführt wird und welcher dadurch zeitweilig niedrig sein kann, so dass die zur Gaskühlung mindestens erforderliche Wassermenge unterschritten wird und das Rohgas nicht ausreichend abgekühlt wird.

Die EP 1390440 B1 beschreibt eine Vorrichtung zum Regeln des Gasdruckes in einer Koksofenkammer mit einer Tauchtasse, der Wasser zugeführt wird sowie einem Tauchrohr, das mit dem Gasraum der Koksofenkammer verbunden ist und in der Tauchtasse endet, wobei die Tauchtasse einen Überlauf sowie einen verschließbaren Ablauf aufweist und wobei das Tauchrohr mit einem Endabschnitt ausgebildet ist, dessen freier Gasaustrittsquerschnitt abhängig ist von dem Flüssigkeitsspiegel in der Tauchtasse, wobei zur Regelung des Flüssigkeitsspiegels ein Ablaufrohr für Wasser vorgesehen ist, dessen einlaufseitiges Ende in das Tauchrohr ragt, und das mantelseitige Einlauföffnungen für den Zufluss von Wasser enthält, wobei innerhalb des Ablaufrohres ein an beiden Seiten offener Schieber angeordnet ist, der Einlauföffnungen des Ablaufrohres nach Maßgabe seiner Stellung in Längsrichtung verschließt und einen vertikal verstellbaren Überlauf für das in das Ablaufrohr einströmende Wasser bildet, und das einlaufseitige Ende des Ablauffrohres von einem Siphonrohr umgeben ist, welches das Ablaufrohr oberseitig verschließt und einen unterhalb des Tauchrohres in die Tauchtasse mündenden Ringkanal für den Zufluss von Wasser bildet. Auch diese Vorrichtung und das damit betriebene Verfahren besitzen den Nachteil, vom Zustrom an Wasser abhängig zu sein, um in der Tauchtasse stets einen gewissen Wasserstand aufbauen zu können. Anders als in der oben aufgeführten EP 649455 B1 ist hier die Zulaufwassermenge konstant und wird nicht geregelt, so dass die Verschmutzungsanfälligkeit gegenüber Gaskondensaten aufgrund des nicht benötigten Regelventils im Wasserzulaufstrom hier mit einem gewissen Aufwand beherrschbar ist.

JP-A-2004/107466 offenbart eine Vorrichtung sowie ein Verfahren zum Regeln des Kammerdruckes von Koksofenkammern mit einer regelbaren Klappe.

Die Zuführung von Wasser in die Rohgasvorlage dient zur Aufrechterhaltung eines Flüssigkeitsstromes, durch den der Gasdruck in der Koksofenkammer geregelt werden kann. Ein zu niedriger Druck an Koksofengas verursacht das Eindringen von Luft in die Koksofenkammer, so dass es durch Verbrennung von Kohle oder Koksofengas zu einer Überhitzung und damit zu einer Beschädigung der Koksofenkammer kommen kann. Ein zu hoher Druck hat ein unerwünschtes Ausgasen von Koksofengas in die Umgebung zur Folge. Das in das Steigrohr oder den Steigrohrkrümmer zugeführte Wasser ermöglicht außerdem eine waschende Funktion und befreit das ausgeführte Koksofengas von Partikeln und kondensierbaren Bestandteilen wie z.B. Teer. Man ist deshalb bestrebt, einen fortgesetzten Wasserfluß in die Rohgasvorlage zu ermöglichen, ohne die Regelung des Gasdruckes zu beeinflussen.

Es besteht deshalb die Aufgabe, eine Vorrichtung zur Regelung des Gasdruckes zur Verfügung zu stellen, die nicht vom Zustrom an Wasser abhängig ist und die dennoch einen Wasserfluß von dem Steigrohr durch die Regelvorrichtung in die Rohgasvorlage ermöglicht. Die Regelvorrichtung soll unempfindlich gegen die Koksofengase sein und dennoch eine gute Durchmischung der Koksofenrohgase mit dem Wasser oder einer Flüssigkeit ermöglichen. Bei Verschließen der Regelvorrichtung soll noch ein Restwasserfluss möglich sein, der sicherstellt, dass die Waschflüssigkeit in die Rohgasvorlage abfließt, damit diese nicht staut und die Koksofenkammer zurückfließt. Andererseits muss ein zuverlässiges Schließen der Regelvorrichtung für Gase möglich sein, damit in der Koksofenkammer kein Unterdruck entsteht, der Luft in deren Gassammelraum und von dort in die Rohgasvorlage saugt.

Die Erfindung löst diese Aufgabe durch eine verstellbare Blende, durch die der Gas- und Flüssigkeitsstrom in die Gasvorlage regelbar ist, so dass der durch die regelbare Blende strömende Mengenstrom in der Menge einstellbar ist. Die Blende kann dabei als horizontal gelagerte und öffnende Blende geartet sein, welche wie eine fotographische Blende (auch "Irisblende" genannt) den Querschnitt des Steigrohrkrümmers in horizontaler Richtung verschließt. Die Blende kann auch als horizontal gelagerte, aber vertikal öffnende Blende geartet sein, deren Lamellen beim Öffnen der Blende beispielsweise nach unten klappen (auch "Irisdüse" genannt).

Der Steigrohrkrümmer kann einen Siphon enthalten, welcher beispielsweise seitlich am Steigrohrkrümmer oder mittig im Steigrohrkrümmer aufgehängt angeordnet sein kann. Auf diese Weise kann die Waschflüssigkeit, die in den Steigrohrkrümmer eingedüst wird, stets abfließen. Es kann aber auch auf den Siphon verzichtet werden, wobei die verstellbare Blende dann so geartet ist, dass diese eine Restöffnung im Querschnitt freilässt. Durch diese Restöffnung kann die Flüssigkeit, die in das Steigrohr eingedüst wird, auch bei Fehlen eines Siphons in die Rohgasvorlage abgelassen werden.

Beansprucht wird insbesondere eine Vorrichtung zur Regelung des Kammerdruckes von Koksofenkammern einer Koksofenbatterie mit Hilfe von einstellbaren Blenden an den Steigrohrkrümmermündungen in die Rohgasvorlage, umfassend
- eine Koksofenbatterie, welche aus einer Anzahl von Koksofenkammern besteht, wobei
- jede einzelne Koksofenkammer gasdicht verschließbar ist, und mit einem Steigrohr ausgerüstet ist, welches über einen Krümmer mit einer unterdruckführenden Rohgasvorlage verbunden ist, und
- das Steigrohr am oberen Ende des Krümmers mit einer Öffnung und ihrem Verschluss versehen ist, der zu öffnen und zu schließen ist, und
- der Krümmer mit einem Flüssigkeitszulauf ausgestattet ist, durch welchen das Steigrohr an und/oder hinter dem Krümmer mit einer in die Rohgasvorlage ablaufenden Flüssigkeit versehen werden kann,
und welche dadurch gekennzeichnet ist, dass
- das Steigrohr hinter dem Krümmer über ein Austrittstück in die Rohgasvorlage mündet, und zwischen dem Krümmer und dem Austrittsstück eine im Querschnitt verstellbare Blende sitzt, durch welche der Strom von Gas und Flüssigkeit verschließbar ist, und die mit einem Mechanismus zur Verstellung des Öffnungsquerschnittes ausgestattet ist, wobei
- entweder der Steigrohrkrümmer und die Rohgasvorlage über einen Siphon verbunden sind, durch den ein Abfließen der Flüssigkeit auch bei Verschluss der Blende möglich ist, oder
- die Blende eine Querschnittsaussparung besitzt, die auch bei vollständiger Schließung einen Teil des Blendenquerschnitts zur Öffnung ausspart.

In einer typischen Ausführungsform der Erfindung handelt es sich bei der Öffnung mit dem Verschluss am Krümmer um einen Deckel, der zum Schließen auf die Öffnung auf dem oberen Ende über dem Abzweig des Krümmers aufgelegt wird und mit einem Griff zur Bedienung und einer Aufhängung an dem Krümmer ausgestattet ist. Dieser dient im Regelbetrieb gegen Ende der Garungszeit vor dem Öffnen der Koksofenkammertüren zum Druckausgleich der Koksofenkammer gegen die Umgebung, und weiterhin zur Reinigung des Steigrohres von Teerbelägen. Ein auf dem oberen Ende des Krümmers aufliegender Deckel ist die vorteilhafteste Ausführungsform, obwohl in einer beispielhaften Ausführungsform auch ein seitlich öffnender Schieber denkbar ist.

Die Blende besteht in einer beispielhaften Ausführungsform aus Platten, welche konzentrisch, tangential und kreisförmig in Richtung der Steigrohrmitte verschließbar sind. Dies entspricht einer Ausführungsform, wie sie vergleichsweise in einer fotographischen Blende vorhanden ist. Zum Öffnen oder Schließen werden diese dann in horizontaler Richtung auf das Zentrum des Rohres hin verschoben. Die Zahl und die Größe der Platten können beliebig sein. Auch die Blenden können in dem Rohr einfach oder mehrfach vorhanden sein. Wichtig ist, dass das Material der Blende gegen die herrschenden Temperaturen und Gas- oder Flüssigkeitsbestandteile beständig ist. Eine Ausführungsform für Blenden, die tangential und kreisförmig in Richtung einer Rohrmitte verschließen ("Irisblenden"), sind aus der US 4094492 A bekannt. Diese Schrift lehrt jedoch keine Ofendruckregelung an Krümmern aus Steigrohren von Koksofenkammern, mit den sich ergebenden besonderen Anforderungen wie hohe Temperaturen, Wasserlauf durch die Blende und Absperrung der Koksofenkammer gegen einen Unterdruck.

Die Blenden in dem Krümmerrohr sind typischerweise mit einem Stellmechanismus verbunden, durch den sich diese von außen bewegen lassen. Die Platten sind in einer Ausführungsform des Verfahrens mit Stiften versehen, die allesamt in einer hierfür vorgesehenen Aussparung oder flexiblen Verbindung eines darüber angeordneten Ringes gelagert werden, so dass die Platten und damit die Blende bei einer Bewegung des Ringes öffnen oder schließen. Der in dem Rohr liegende Ring wird dann von außen zusammengezogen oder auseinandergedrückt, so dass sich über die Stifte die Platten bewegen, welche das Rohr öffnen oder schließen. Hierdurch lässt sich der Öffnungsgrad der Blende regeln.

In einer weiteren Ausführungsform besteht die Blende aus Platten, welche konzentrisch, sekantial und direkt in Richtung der Steigrohrkrümmermitte verschließbar sind. Dies können beispielsweise Platten sein, die von der Außenseite der Blende in die Mitte des Steigrohrkrümmers geschoben werden, bis sich diese zu einer ringförmigen Scheibe mit innerer Öffnung oder vollständig geschlossenen Scheibe schließen. Zum Öffnen oder Schließen werden diese dann in horizontaler Richtung verschoben. Die Zahl der Platten, deren Größe und Material können dabei ebenfalls beliebig sein.

Auch diese Blenden sind typischerweise in dem Krümmerrohr mit einem Regelmechanismus verbunden, durch den sich diese von außen bewegen lassen. Die Platten sind in einer Ausführungsform mit Stiften versehen. Die Stifte können mit durch die Krümmerwand nach außen führenden Hebeln aus dem Krümmer oder der Mitte des Krümmerohres gezogen werden, so dass die Platten und damit die Blende bei einer Bewegung des Hebels öffnen oder schließen. Hierdurch lässt sich der Öffnungsgrad der Blenden regeln.

In einer weiteren Ausführungsform bestehen die Blenden aus Platten, die zum Öffnen aufwärts oder abwärts in vertikale Richtung verschwenkt werden. Die Platten sind dann als Lamellen geartet, die von einem Stellmechanismus bevorzugt nach unten in Strömungsrichtung gezogen werden. Dies entspricht einer Ausführungsform, wie sie vergleichweise in einer Trichterblende vorhanden ist. Je weiter die Lamellen nach unten gezogen werden, desto weiter öffnet sich die Blende. Die Blendenzahl, deren Größe und Material können dabei ebenfalls beliebig sein. Eine Ausführungsform für Blenden, die zum Öffnen im Rohr aufwärts oder abwärts in vertikale Richtung verschwenkt werden ("Irisdüsen"), sind aus der DE 10002529 A1 bekannt. Diese Schrift lehrt jedoch ebenfalls keine Druckregelung an Krümmern aus Steigrohren von Koksofenkammern, mit den sich ergebenden besonderen Anforderungen wie hohe Temperaturen, Wasserlauf durch die Blende und Absperrung der Koksofenkammer gegen einen Unterdruck.

Die Blenden sind in einer weiteren Ausführungsform mit einem umlaufenden Ring versehen, der sich durch einen Regelmechanismus über einen Hebel zur Übertragung zusammenziehen oder auseinanderdrücken lässt, so dass die Platten hochgezogen oder heruntergelassen werden und die Blende mit dem Krümmer sich dadurch öffnet oder schließt. Hierdurch lässt sich ebenfalls der Öffnungsgrad der Blenden regeln. Der Ring ist in einer einfachen Ausführungsart als Draht gearbeitet, der durch Aufnahmehaken in den Blenden kreisförmig um diese geführt herum wird. Die Ausführung des mechanischen Antriebes des Regelmechanismusses kann beliebig sein und die Übertragung des Stellimpulses kann dabei dem Fachmann überlassen werden.

In einer beispielhaften Ausführungsform ist die Blende durch einen elektrischen Regelmechanismus verstellbar. In einer weiteren Ausführungsform ist die Blende durch einen pneumatischen Regelmechanismus verstellbar. Auch ein manueller Stell- oder Regelmechanismus ist in einer einfachen Ausführungsform denkbar.

Die Blenden mit dem Stellmechanismus können in einem Rohrabschnitt des Krümmers angeordnet sein, der aus dem Krümmer herausnehmbar ist. Der herausnehmbare Rohrabschnitt kann hierzu beispielhaft über Flanschverbindungen mit dem Krümmer verbunden sein.

Die Vorrichtung ist in einer bevorzugten Ausführungsform mit einem Siphon ausgestattet. Das Austrittsstück kann mit einem Siphon ausgestattet sein, der durch das Zentrum des Steigrohrkrümmers läuft, und der von der Blende im geschlossenen Zustand umschlossen wird. Dadurch ist auch bei geschlossener Blende ein fortgesetzter Wasserfluss möglich. Der Steigrohrkrümmer kann auch an der Seite mit einem Siphon ausgestattet sein, der den Steigrohrkrümmer außerhalb des Steigrohrs seitlich passiert. Dadurch ist ein Flüssigkeitsdurchlass auch dann noch möglich, wenn die Blende vollständig geschlossen ist.

Der Siphon kann beliebig geartet sein. Dieser kann beispielhaft als einfaches S-geformtes Rohr, aber auch als übergestülptes Doppelrohr mit innenliegender Öffnung gestaltet sein. Dieser kann auch mit separaten Förderungseinrichtungen versehen sein. Der Siphon kann aus einem beliebigen Material geartet und von beliebiger Bauweise sein.

Das Rohr des Krümmers mit den Blenden besitzt in einer Ausführungsform des Verfahrens, gerechnet an der Stelle der Blenden, ohne Blenden einen Durchmesser von 0,25 m bis 0,85 m. Es kann jedoch zur Ausführung des Verfahrens einen beliebig großen Durchmesser besitzen. Das Steigrohr, welches mit dem Krümmer verbunden ist, besitzt in einer Ausführungsform der Erfindung oberhalb des Abzweiges einen Deckel, der zu öffnen und zu schließen ist, und der im Regelbetrieb gegen Ende der Garungszeit vor dem Öffnen der Koksofenkammertüren zum Druckausgleich der Koksofenkammer gegen die Umgebung und zur Reinigung des Steigrohres von Teerbelägen dient.

Die Erfindung betrifft auch ein Verfahren zur Regelung des Gasstroms aus einer Koksofenkammer in eine Rohgasvorlage. Beansprucht wird insbesondere ein Verfahren zur Regelung des Kammerdruckes von Koksofenkammern einer Koksofenbatterie mit Hilfe von einstellbaren Blenden an den Steigrohrkrümmermündungen in die Rohgasvorlage, wobei
- Kohle in den Koksofenkammern einer Koksofenbatterie zyklisch verkokt wird, und die Zyklen aus den Vorgängen Beladen - Verkoken - Ausdrücken bestehen, und
- während des Verkokungsvorganges der Gasdruck in der Koksofenkammer durch ein Steigrohr mit einem Regelorgan am Ende des Steigrohres geregelt wird, welches das Verkokungsgas über einen Krümmer aus dem Gasraum der Verkokungskammer in eine unterdruckführende Rohgasvorlage überführt, und
- das Steigrohr kokskammerauswärtsführend mit einem Flüssigkeitsstrom versehen wird,
und welches dadurch gekennzeichnet ist, dass
- der Gasdruck in dem Gasraum der Koksofenkammer durch eine Blende als Regelorgan geregelt wird, welche den Steigrohrkrümmeraustritt im Querschnitt verändert, wobei der Querschnitt der Blende durch einen Regelmechanismus regelbar ist, und
- die Flüssigkeit aus dem Steigrohrkrümmer bei vollständiger Schließung der Blende entweder über einen Siphon oder über eine Aussparungsöffnung in der Blende in die Rohgasvorlage abfließt.

Das Koksofengas strömt typischerweise mit einer Temperatur von 700 bis 1100 °C in den Steigrohrkrümmer ein und wird sofort nach Einströmen durch das Einsprühen von Flüssigkeit gekühlt. Die verbleibende Flüssigkeit wird dabei in die Rohgasvorlage abgeführt. Nach der Abkühlung hat das Gas typischerweise noch eine Temperatur von 75 bis 120 °C, wie sich durch Temperaturmessungen zeigen lässt.

Das Verfahren kann so gestaltet werden, dass die Blende in Abhängigkeit von dem Innendruck der Koksofenkammer geregelt wird. Der Öffnungs- und Schliessvorgang der Blende kann somit am Verlauf eines typischen Verkokungszyklusses geregelt werden. Zum Füllen der Koksofenkammer wird die Blende vollständig geöffnet, so dass die Füllgase mit dem in der Rohgasvorlage herrschendem Unterdruck in die Rohgasvorlage abgesaugt werden. Während des Verkokungszyklusses wird der Druck in der Koksofenkammer so geregelt, dass stets ein Sollwert im Gasraum der Koksofenkammer herrscht. Zum Ausdrücken des ausgegarten Kokses aus der Koksofenkammer wird der Gasweg von der Koksofenkammer in die Rohgasvorlage durch das teilweise oder vollständige Schließen der Blenden unterbrochen. Auf diese Weise kann keine Luft in die Rohgasvorlage gelangen (sogenanntes "Abhängen der Kokskammer von der Rohgasvorlage"). Während dieses Vorganges kann die Flüssigkeit über den Siphon weiter in die Rohgasvorlage strömen, falls die Blende nicht mit einer Restöffnung versehen ist. Damit ist stets eine optimale Druckeinstellung in der Koksofenkammer möglich, die nicht vom Flüssigkeitszufluss in den Steigrohrkrümmer abhängt. Der Vorgang des Öffnens und des Schließens der Blende kann vorteilhaft rechnergesteuert sein.

Das Verfahren und der Mechanismus können so eingestellt werden, dass der Stellmechanismus bei Ausfall des Antriebes in der letzten Regelstellung verharrt. Dadurch kann einem Überdruck in der Koksofenkammer entgegen gewirkt werden, da der Druck in der Koksofenkammer während des Verkokungsvorganges in der Regel sinkt. Einer unerwünschten Abnahme des Druckes in der Koksofenkammer kann in einem solchen Fall mit einer Erhöhung des Vorlagendrucks begegnet werden. Auf diese Weise ist es möglich, bei Ausfall des Antriebes der Regeleinrichtung den Gasdruck in dem Gasraum der Koksofenkammer durch eine Veränderung des Unterdrucks in der Rohgasvorlage zu regeln.

Das Steigrohr, welches mit dem Krümmer verbunden ist, besitzt in vielen Ausführungsformen oberhalb des Abzweiges einen Deckel, der im Regelbetrieb gegen Ende der Garungszeit vor dem Öffnen der Köksofenkammertüren zum Druckausgleich der Koksofenkammer gegen die Umgebung und zur Reinigung des Steigrohres von Teerbelägen dient. In einer Ausführungsform der Erfindung wird der Deckel des Steigrohres oberhalb des Abzweiges zum Öffnen der Koksofenkammertüren bei gleichzeitigem Schließen der Blende temporär geöffnet. Durch das Schließen der Blende kann somit keine Luft durch den Unterdruck in der Vorlage durch den Krümmer angesaugt werden und die Rohgasvorlage wird gegen die Umgebung abgedichtet. Auch der Deckel, der in dem Steigrohr über dem Abzweig angeordnet ist, kann in einer Ausführungsform der Erfindung pneumatisch zu öffnen oder schließen sein.

Der Regelmechanismus für die Blenden oder den Deckel kann beispielhaft durch einen elektrischen Antrieb verstellbar sein. Dieser kann aber auch beispielhaft durch einen pneumatischen Antrieb verstellbar sein. In einer einfachen Ausführungsform ist auch eine manuelle Verstellbarkeit des Deckels oder der Blende denkbar. In einer Ausführungsform der Erfindung wird der pneumatische Antrieb mit einem Stickstoff enthaltenden Gas angetrieben. In einer weiteren Ausführungsform wird der pneumatische Antrieb mit Luft oder mit einem Luft enthaltenden Gas angetrieben.

Die in den Krümmer eingelassene Flüssigkeit kann beliebig geartet sein. Dies ist bevorzugt Wasser. Dieses dient zum Fördern von Partikeln und Waschen des Koksofengases. Das Wasser kann in einer Ausführungsform ammoniakhaltig sein. Zum Steuern des Regelmechanismusses kann eine rechnergesteuerte Einheit eingesetzt werden. Diese kann in Abhängigkeit vom Druck beispielsweise im Krümmer eingesetzt werden. Hierzu befindet sich in einer beispielhaften Ausführungsform in dem Krümmer eine Druckimpulsleitung, die den Druck in dem Krümmer an einen Druckmesssensor weiterleitet.

Vorteil der Erfindung ist, eine Regelung des Gasstromes von der Koksofenkammer zu der Rohgasvorlage zur Verfügung zu stellen, die nicht vom Zustrom an Wasser oder Flüssigkeit abhängig ist und die dennoch einen Flüssigkeitsfluß von dem Steigrohr durch die Regelvorrichtung in die Rohgasvorlage ermöglicht. Die Regelung ermöglicht damit weiterhin eine gute Durchmischung der Koksofenrohgase mit dem Wasser oder einer Flüssigkeit bei geschlossener Blende. Bei Verschließen der Regelvorrichtung ist ein Restwasserfluss möglich, der sicherstellt, dass die Waschflüssigkeit in die Rohgasvorlage abfließt. Ein zuverlässiges Schließen der Regelvorrichtung für Gase ist bei geeigneter Konstruktion der Blende jederzeit möglich.

Die Erfindung wird anhand von elf Zeichnungen dargestellt, wobei diese Zeichnungen nur Ausführungsformen der Erfindung wiedergeben.

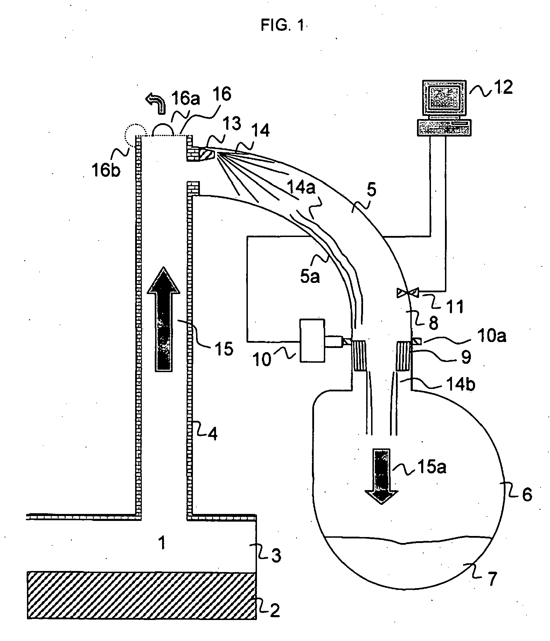

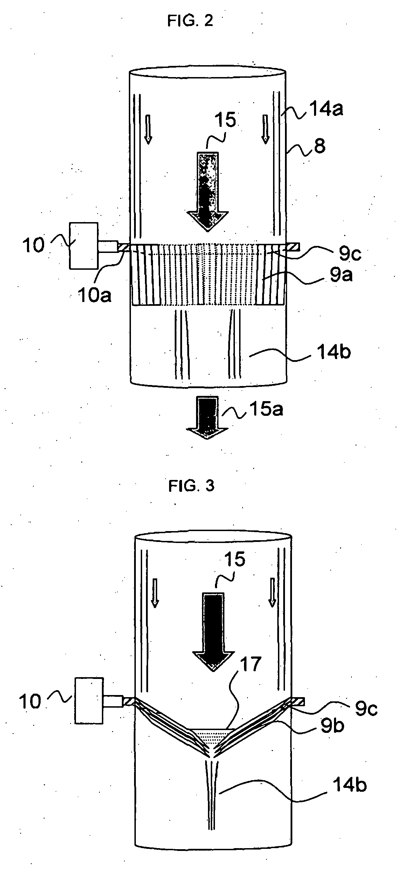

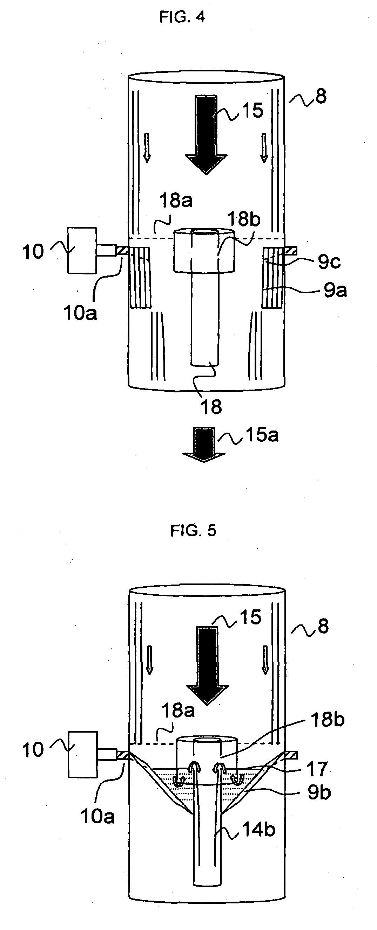

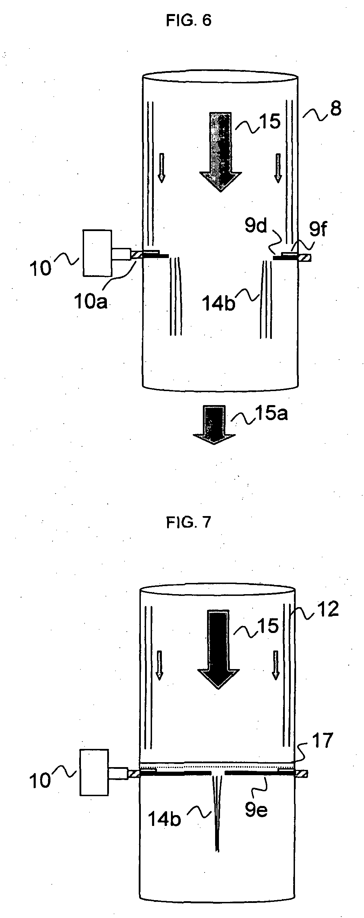

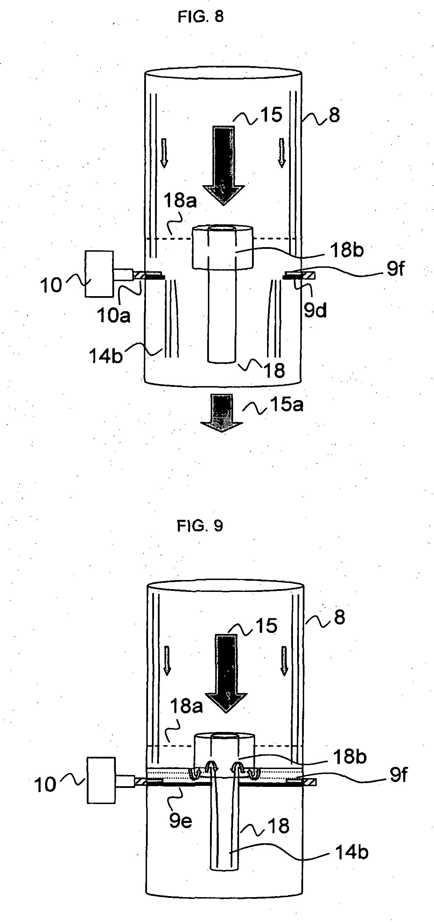

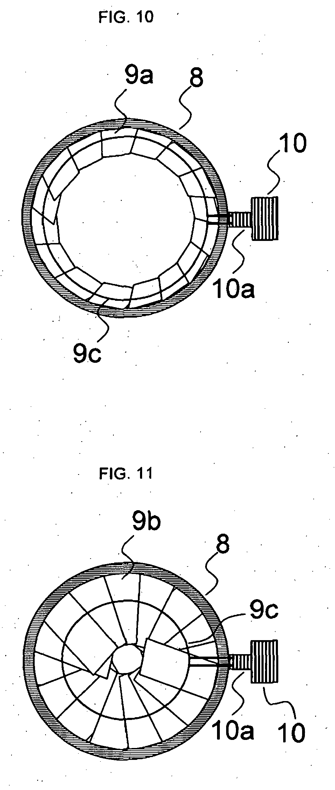

FIG. 1 zeigt eine Anordnung mit Koksofenkammer, Steigrohr, Krümmer, Rohgasvorlage. FIG. 2 und FIG. 3 zeigen eine Vorrichtung mit der erfindungsgemäßen Blende, die hier in vertikal öffnender Form angeordnet ist. FIG. 2 zeigt diese in geöffneter und FIG. 3 in geschlossener Stellung. FIG. 4 und FIG. 5 zeigen eine Vorrichtung mit der erfindungsgemäßen Blende, die hier in vertikal öffnender Form angeordnet ist und die einen Siphon im Rohr enthält. FIG. 4 zeigt diese in geöffneter und FIG. 5 in geschlossener Stellung. FIG. 6 und FIG. 7 zeigen eine Vorrichtung mit der erfindungsgemäßen Blende, die hier in horizontal öffnender Form angeordnet ist. FIG. 6 zeigt diese in geöffneter und FIG. 7 in geschlossener Stellung. FIG. 8 und FIG. 9 zeigen eine Vorrichtung mit der erfindungsgemäßen Blende, die hier in horizontal öffnender Form angeordnet ist und einen Siphon im Rohr enthält. FIG. 8 zeigt diese in geöffneter und FIG. 9 in geschlossener Stellung. Die erfindungsgemäßen Blenden in FIG. 2 bis 9 sind in der Seitenansicht zu sehen. FIG. 10 und FIG. 11 zeigen die erfindungsgemäßen Blenden vertikal von oben, FIG. 10 in geschlossener Form und FIG. 11 in geöffneter Form.

FIG. 1 zeigt eine Koksofenkammer (**1**), welche zur Produktion von Koks (**2**) genutzt wird. Der Gasraum (**3**) ist über ein Steigrohr (**4**) mit einem Krümmer (**5**) verbunden, welcher in eine Rohgasvorlage (**6**) mündet, die unter Unterdruck steht. Diese ist je nach Betriebszustand mit einer Flüssigkeit (**7**) gefüllt. Erfindungsgemäß befindet sich nun am Austrittsstück (**8**) eine Blende (**9**), die das Öffnen und Schließen des Gasdurchflusses ermöglicht. Zu sehen ist der Regelungsmechanismus **(10),** der die Blende **(9)** öffnet oder schließt. Dieser wird in Abhängigkeit von dem Druck in dem Krümmer **(5)** geregelt. Hierzu befindet sich in dem Krümmer **(5)** eine Druckmesseinrichtung **(11),** die mit einem Rechner **(12)** verbunden ist, der die Stellung der Blende **(9)** regelt. In dem Krümmer **(5)** befindet sich weiterhin eine Zuführungseinrichtung **(13)** für Flüssigkeit **(14),** welche bevorzugt Wasser ist. Dieses fließt an der Krümmerwandung **(5a)** entlang. Zu sehen ist hier die Blende **(9)** in geöffneter Form, die den Strom an Wasser **(14a)** und den Rohgasstrom **(15a)** hindurchläßt. Zu sehen ist hier ebenfalls der Rohgasstrom **(15)** aus der Koksofenkammer **(1).** Der Deckel **(16)** des Steigrohres **(4),** welcher über einen Griff **(16a)** bewegt werden kann, und welcher über eine Aufhängung **(16b)** an dem Steigrohr **(4)** aufgehängt ist, kann zum Druckausgleich oder zur Reinigung temporär geöffnet werden.

FIG. 2 zeigt ein Austrittstück **(8)** mit einer erfindungsgemäßen Blende **(9a)** aus Platten, welche in vertikal öffnender Form angeordnet ist. An der Wand des Austrittsstücks **(8)** läuft der im Krümmer eingedüste Flüssigkeitsstrom **(14)** entlang **(14a).** Zu sehen ist der Rohgasstrom **(15),** die fast vollständig geöffnete vertikale Blende **(9a),** der abfließende Flüssigkeitsstrom **(14b)** und der durchgelassene Rohgasstrom **(15a).** Die Blende (9a) wird durch einen Regelmechanismus **(10),** der über einen Hebel **(10a)** und einen Draht **(9c)** als Stellmechanismus den Steuerimpuls überträgt, geöffnet oder geschlossen.

FIG. 3 zeigt die erfindungsgemäße vertikal öffnende Blende **(9b)** aus Platten in geschlossener Form. Zu sehen ist hier ein Reststrom an Flüssigkeit **(14b),** wobei sich ein Flüssigkeitsspiegel **(17)** in der Blende (9b) bildet. Zu sehen ist ebenfalls der Stellmechanismus zur Steuerung der vertikalen Blenden **(9c),** der durch einen Draht gebildet wird.

FIG. 4 zeigt ein Austrittstück **(8)** mit einer erfindungsgemäßen Blende **(9a),** welche in vertikal öffnender Form angeordnet ist, wobei sich in der Austrittsstückmitte ein Siphon **(18)** befindet. Dieser ist mit einer Aufhängung **(18a)** befestigt und besitzt im Inneren eine Öffnung **(18b).** Zu sehen ist der Rohgasstrom **(15),** die fast vollständig geöffnete vertikale Blende **(9a),** der abfließende Flüssigkeitsstrom **(14b)** und der durchgelassene Rohgasstrom **(15a).** Die Blende **(9a)** wird durch einen Regelmechanismus **(10)** geöffnet oder geschlossen.

FIG. 5 zeigt ein Austrittstück **(8)** mit einer erfindungsgemäßen vertikal öffnenden Blende **(9b),** welche hier in geschlossener Form angeordnet ist, wobei sich in der Austrittsstückmitte ein Siphon **(18)** befindet. Dieser ist mit einer Aufhängung **(18a)** befestigt. Der Siphon besitzt im Inneren eine Öffnung **(18b),** bis zu der sich ein Flüssigkeitsspiegel **(17)** befindet. Dadurch wird kein Rohgas **(15)** durchgelassen. Zu sehen ist der Rohgasstrom **(15),** die fast vollständig geschlossene vertikale Blende **(9b)** und der abfließende Restflüssigkeitsstrom **(14b).** Die Blende **(9b)** wird durch einen Regelmechanismus (10) geöffnet oder geschlossen.

FIG. 6 zeigt ein Austrittstück **(8)** mit einer erfindungsgemäßen Blende **(9d)** aus Platten, welche in horizontal öffnender Form angeordnet ist. Zu sehen ist der Rohgasstrom **(15),** die fast vollständig geöffnete horizontale Blende **(9d),** der abfließende Flüssigkeitsstrom **(14b)** und der durchgelassene Rohgasstrom **(15a).** Die Blende **(9d)** wird durch einen Regelmechanismus **(10)** geöffnet oder geschlossen. Die horizontal beweglichen Platten **(9d)** können dabei beispielhaft über einen ringförmigen Stellmechanismus **(9f)** zur Steuerung der horizontalen Blenden **(9d)** über das gesamte Rohr bewegt werden.

FIG. 7 zeigt ein Austrittstück **(8)** mit einer erfindungsgemäßen Blende **(9e)** aus Platten, welche in horizontal geschlossener Form angeordnet ist. Zu sehen ist der Rohgasstrom **(15),** die fast vollständig geschlossene horizontale Blende **(9e)** und der abfließende Restflüssigkeitsstrom **(14b).** Die Blende **(9e)** wird durch einen Stellmechanismus (9f) geöffnet oder geschlossen.

FIG. 8 zeigt ein Austrittstück **(8)** mit einer erfindungsgemäßen Blende **(9d)**, welche in horizontal öffnender Form angeordnet ist, wobei sich in der Austrittsstückmitte ein Siphon **(18)** befindet. Dieser ist mit einer Aufhängung **(18a)** befestigt. Zu sehen ist der Rohgasstrom **(15),** die fast vollständig geöffnete horizontale Blende **(9d)**, der abfließende Flüssigkeitsstrom **(14b)** und der durchgelassene Rohgasstrom **(15a).** Die Blende **(9d)** wird durch einen Stellmechanismus **(9f)** geöffnet oder geschlossen.

FIG. 9 zeigt ein Austrittstück **(8)** mit einer erfindungsgemäßen Blende (9d), welche in horizontal geschlossener Form angeordnet ist, wobei sich in der Austrittsstückmitte ein Siphon **(18)** befindet. Dieser ist mit einer Aufhängung **(18a)** befestigt. Zu sehen ist der Rohgasstrom **(15),** die fast vollständig geöffnete horizontale Blende **(9d)** und der abfließende Restflüssigkeitsstrom **(14b).** Der Siphon besitzt im Inneren eine Öffnung **(18b),** bis zu der sich ein Flüssigkeitsspiegel **(17)** befindet. Dadurch wird kein Rohgas **(15)** durchgelassen. Die Blende **(9e)** wird durch einen Stellmechanismus **(9f)** mit Aussparungen zur Steuerung der horizontalen Blenden **(9e)** geöffnet oder geschlossen.

FIG. 10 zeigt die erfindungsgemäße geöffnete Blende **(9a)** vertikal von oben. Zu sehen ist das Austrittsstück () des Steigrohrkrümmers im Durchmesser, die Platten **(9a)** in geschlossener Form und der Regelmechanismus **(10)** mit Übertragung **(10a).** Dieser wird hier über einen Draht als Stellmechanismus **(9c)** übertragen, der sich kreisförmig in geeigneten Aufnahmevorrichtungen um die Blenden (9a) zieht.

FIG. 11 zeigt die erfindungsgemäße geschlossene Blende (9b) im Austrittsstück (8) des Steigrohres vertikal von oben, hier in geschlossener Form.

### Bezugszeichenliste

- 1: Koksofenkammer
- 2: Koks, Kohle
- 3: Gasraum
- 4: Steigrohr
- 5: Krümmer
- 5a: Rohr des Krümmers, Steigrohrkrümmermündung
- 6: Rohgasvorlage
- 7: Flüssigkeit
- 8: Austrittsstück
- 9: Blende
- 9a: Geöffnete vertikale Blende
- 9b: Geschlossene vertikale Blende
- 9c: Draht zur Steuerung der vertikalen Blenden
- 9d: Geöffnete horizontale Blende
- 9e: Geschlossene horizontale Blende
- 9f: Stellmechanismus mit Aussparungen zur Steuerung der horizontalen Blenden
- 10: Regelmechanismus
- 10a: Hebel zur Übertragung
- 11: Druckmesseinrichtung
- 12: Rechner
- 13: Zuführungseinrichtung für Flüssigkeit
- 14: Flüssigkeit
- 14a: Flüssigkeitsstrom im Austrittstück
- 14b: Restflüssigkeitsstrom
- 15: Rohgasstrom
- 15a: Durchgelassener Rohgasstrom
- 16: Deckel des Steigrohres
- 16a: Griff für Deckel
- 16b: Aufhängung für Deckel
- 17: Flüssigkeitsspiegel
- 18: Siphon
- 18a: Aufhängung für Siphon
- 18b: Öffnungen im Siphon

## Patentansprüche

1. Vorrichtung zur Regelung des Kammerdruckes von Koksofenkammern (1) einer Koksofenbatterie mit Hilfe von einstellbaren Blenden (9) an den Steigrohrkrümmermündungen (5a) in die Rohgasvorlage (6), umfassend
• eine Koksofenbatterie, welche aus einer Anzahl von Koksofenkammern (1) besteht, wobei
• jede einzelne Koksofenkammer (1) gasdicht verschließbar ist, und mit einem Steigrohr (4) ausgerüstet ist, welches über einen Krümmer (5) mit einer unterdruckführenden Rohgasvorlage (6) verbunden ist, und
• das Steigrohr (4) am oberen Ende des Krümmers (5) mit einer Öffnung und ihrem Verschluss (16) versehen ist, der zu öffnen und zu schließen ist, und
• der Krümmer (5) mit einem Flüssigkeitszulauf (13) ausgestattet ist, durch welchen das Steigrohr (4) an und/oder hinter dem Krümmer (5) mit einer in die Rohgasvorlage (6) ablaufenden Flüssigkeit (14b) versehen werden kann,
**dadurch gekennzeichnet, dass**
• das Steigrohr (4) in Gasströmungsrichtung hinter dem Krümmer (5) über ein Austrittstück (8) in die Rohgasvorlage (6) mündet, und zwischen dem Krümmer (5) und dem Austrittsstück (8) eine im Querschnitt verstellbare Blende (9) sitzt, durch welche der Strom von Gas und Flüssigkeit verschließbar ist, und die mit einem Mechanismus (10) zur Verstellung des Öffnungsquerschnittes ausgestattet ist, wobei
• entweder der Steigrohrkrümmer (5) und die Rohgasvorlage (6) über einen Siphon (18) verbunden sind, durch den ein Abfließen der Flüssigkeit (14b) auch bei Verschluss der Blende (9) möglich ist, oder
• die Blende (9) eine Querschnittsaussparung besitzt, die auch bei vollständiger Schließung einen Teil des Blendenquerschnitts zur Öffnung ausspart.

2. Vorrichtung zur Regelung des Kammerdruckes von Koksofenkammern (1) einer Koksofenbatterie mit Hilfe von einstellbaren Blenden (9) an den Steigrohrkrümmermündungen (5a) in die Rohgasvorlage (6) nach Anspruch 1, **dadurch gekennzeichnet, dass** es sich bei der Öffnung mit dem Verschluss (16) am Krümmer (5) um einen Deckel (16) handelt, der zum Schließen auf eine Öffnung auf dem oberen Ende über dem Abzweig des Krümmers (5) aufgelegt wird, und der mit einem Griff (16a) zur Bedienung und einer Aufhängung (16b) an dem Krümmer (5) ausgestattet ist.

3. Vorrichtung zur Regelung des Kammerdruckes von Koksofenkammern (1) einer Koksofenbatterie mit Hilfe von einstellbaren Blenden (9) an den Steigrohrkrümmermündungen (5a) in die Rohgasvorlage (6) nach einem der Ansprüche 1 oder 2, **dadurch gekennzeichnet, dass** die Blende (9) aus Platten (9d,9e) besteht, welche konzentrisch, tangential und kreisförmig horizontal in Richtung der Steigrohrmitte verschließbar sind.

4. Vorrichtung zur Regelung des Kammerdruckes von Koksofenkammern (1) einer Koksofenbatterie mit Hilfe von einstellbaren Blenden (9) an den Steigrohrkrümmermündungen (5a) in die Rohgasvorlage (6) nach Anspruch 3, **dadurch gekennzeichnet, dass** die Platten (9) mit Stiften (9f) versehen sind, die allesamt in einer hierfür vorgesehenen Aussparung eines darüber angeordneten Ringes (9f) gelagert werden, so dass die Blende (9) bei einer Bewegung des Ringes (9f) öffnet oder schließt.

5. Vorrichtung zur Regelung des Kammerdruckes von Koksofenkammern (1) einer Koksofenbatterie mit Hilfe von einstellbaren Blenden (9) an den Steigrohrkrümmermündungen (5a) in die Rohgasvorlage (6) nach einem der Ansprüche 1 oder 2, **dadurch gekennzeichnet, dass** die Blende (9) aus Platten (9d,9e) besteht, welche konzentrisch, sekantial und direkt horizontal in Richtung der Steigrohrmitte verschließbar sind.

6. Vorrichtung zur Regelung des Kammerdruckes von Koksofenkammern (1) einer Koksofenbatterie mit Hilfe von einstellbaren Blenden (9) an den Steigrohrkrümmermündungen (5a) in die Rohgasvorlage (6) nach Anspruch 5, **dadurch gekennzeichnet, dass** die Platten (9) mit Stiften (9f) versehen sind, wobei die Stifte (9f) mit durch die Krümmerwand nach außen führenden Hebeln (10a) aus dem Krümmer (5) gezogen werden können, so dass die Blende (9) bei einer Bewegung des Hebels (10a) öffnet oder schließt.

7. Vorrichtung zur Regelung des Kammerdruckes von Koksofenkammern (1) einer Koksofenbatterie mit Hilfe von einstellbaren Blenden (9) an den Steigrohrkrümmermündungen (5a) in die Rohgasvorlage (6) nach Anspruch 1, **dadurch gekennzeichnet, dass** die Blende (9) aus Platten (9a,9b) besteht, welche zum Öffnen aufwärts oder abwärts in vertikale Richtung verschwenkt werden.

8. Vorrichtung zur Regelung des Kammerdruckes von Koksofenkammern (1) einer Koksofenbatterie mit Hilfe von einstellbaren Blenden (9) an den Steigrohrkrümmermündungen (5a) in die Rohgasvorlage (6) nach Anspruch 7, **dadurch gekennzeichnet, dass** die Platten (9) mit einem umlaufenden Draht (9c) versehen sind, der sich durch einen Hebel zur Übertragung (10a) zusammenziehen oder auseinanderdrücken lässt, so dass die Platten (9a,9b) hochgezogen oder heruntergelassen werden und die Blende (9) in dem Krümmer (5) sich dadurch öffnet oder schließt.

9. Vorrichtung zur Regelung des Kammerdruckes von Koksofenkammern (1) einer Koksofenbatterie mit Hilfe von einstellbaren Blenden (9) an den Steigrohrkrümmermündungen (5a) in die Rohgasvorlage (6) nach einem der Ansprüche 1 bis 8, **dadurch gekennzeichnet, dass** die Blende (9) durch einen elektrischen Regelmechanismus (10) verstellbar ist.

10. Vorrichtung zur Regelung des Kammerdruckes von Koksofenkammern (1) einer Koksofenbatterie mit Hilfe von einstellbaren Blenden (9) an den Steigrohrkrümmermündungen (5a) in die Rohgasvorlage (6) nach einem der Ansprüche 1 bis 8, **dadurch gekennzeichnet, dass** die Blende (9) durch einen pneumatischen Regelmechanismus (10) verstellbar ist.

11. Vorrichtung zur Regelung des Kammerdruckes von Koksofenkammern (1) einer Koksofenbatterie mit Hilfe von einstellbaren Blenden (9) an den Steigrohrkrümmermündungen (5a) in die Rohgasvorlage (6) nach einem der Ansprüche 1 bis 10, **dadurch gekennzeichnet, dass** die Blenden (9) mit dem Regelmechanismus (10) in einem Rohrabschnitt des Krümmers (5) angeordnet sind, der aus dem Krümmer (5) herausnehmbar ist.

12. Vorrichtung zur Regelung des Kammerdruckes von Koksofenkammern (1) einer Koksofenbatterie mit Hilfe von einstellbaren Blenden (9) an den Steigrohrkrümmermündungen (5a) in die Rohgasvorlage (6) nach Anspruch 11, **dadurch gekennzeichnet, dass** der herausnehmbare Rohrabschnitt über Flanschverbindungen mit dem Krümmer (5) zu verbinden ist.

13. Vorrichtung zur Regelung des Kammerdruckes von Koksofenkammern (1) einer Koksofenbatterie mit Hilfe von einstellbaren Blenden (9) an den Steigrohrkrümmermündungen (5a) in die Rohgasvorlage (6) nach einem der Ansprüche 1 bis 12, **dadurch gekennzeichnet, dass** der Steigrohrkrümmer (5) mit einem Siphon (10) ausgestattet ist, der durch das Zentrum des Steigrohrkrümmers (5) läuft, und der von der Blende (9) im geschlossenen Zustand umschlossen wird.

14. Vorrichtung zur Regelung des Kammerdruckes von Koksofenkammern (1) einer Koksofenbatterie mit Hilfe von einstellbaren Blenden (9) an den Steigrohrkrümmermündungen in die Rohgasvorlage (6) nach einem der Ansprüche 1 bis 12, **dadurch gekennzeichnet, dass** der Steigrohrkrümmer (5) mit einem Siphon (18) ausgestattet ist, der den Steigrohrkrümmer (5) außerhalb des Steigrohres (4) seitlich passiert.

15. Vorrichtung zur Regelung des Kammerdruckes von Koksofenkammern (1) einer Koksofenbatterie mit Hilfe von einstellbaren Blenden (9) an den Steigrohrkrümmermündungen in die Rohgasvorlage (6) nach einem der Ansprüche 1 bis 14, **dadurch gekennzeichnet, dass** das Rohr des Krümmers (5) mit der Blende (9), gerechnet an der Stelle der Blenden, ohne Blende einen Durchmesser von 0,25 m bis 0,85 m besitzt.

16. Verfahren zur Regelung des Kammerdruckes von Koksofenkammern (1) einer Koksofenbatterie mit Hilfe von einstellbaren Blenden (9) an den Steigrohrkrümmermündungen (5a) in die Rohgasvorlage (6) nach einem der Ansprüche 1 bis 15, wobei
• Kohle (2) in den Koksofenkammern (1) einer Koksofenbatterie zyklisch verkokt wird, und die Zyklen aus den Vorgängen Füllen - Verkoken - Ausdrücken bestehen, und
• während des Verkokungsvorganges der Gasdruck in der Koksofenkammer (1) durch ein Regelorgan (9) am Ende des Steigrohrkrümmers (5) geregelt wird, welches das Verkokungsgas (15) aus dem Gasraum (3) der Verkokungskammer (1) in eine unterdruckführende Rohgasvorlage (6) überführt, und
• der Krümmer (5) des Steigrohres (4) kokskammerauswärtsführend mit einem Flüssigkeitsstrom (14a) versehen wird,
**dadurch gekennzeichnet, dass**
• der Gasdruck in dem Gasraum (3) der Koksofenkammer (1) durch eine Blende (9) geregelt wird, welche den Steigrohrkrümmeraustritt (8) im Querschnitt verändert, wobei der Querschnitt der Blende (9) durch einen Regelmechanismus (10) regelbar ist, und
• die Flüssigkeit aus dem Steigrohrkrümmer (5) bei vollständiger Schließung der Blende (9) entweder über einen Siphon (18) oder über eine Aussparungsöffnung in der Blende (9) in die Rohgasvorlage (6) abfließt.

17. Verfahren zur Regelung des Kammerdruckes von Koksofenkammern (1) einer Koksofenbatterie mit Hilfe von einstellbaren Blenden (9) an den Steigrohrkrümmermündungen (5a) in die Rohgasvorlage (6) nach Anspruch 16, **dadurch gekennzeichnet, dass** das Koksofengas (15) mit einer Temperatur von 700 bis 1100 °C in den Steigrohrkrümmer (5) einströmt und sofort durch das Einsprühen von Flüssigkeit (14) gekühlt wird und die verbleibende Flüssigkeit (14) in die Rohgasvorlage (6) abgeführt wird.

18. Verfahren zur Regelung des Kammerdruckes von Koksofenkammern (1) einer Koksofenbatterie mit Hilfe von einstellbaren Blenden (9) an den Steigrohrkrümmermündungen (5a) in die Rohgasvorlage (6) nach einem der Ansprüche 16 oder 17, **dadurch gekennzeichnet, dass** die Blende (9) in Abhängigkeit von dem Innendruck der Koksofenkammer (1) geregelt wird.

19. Verfahren zur Regelung des Kammerdruckes von Koksofenkammern (1) einer Koksofenbatterie mit Hilfe von einstellbaren Blenden (9) an den Steigrohrkrümmermündungen (5a) in die Rohgasvorlage (6) nach Anspruch 18, **dadurch gekennzeichnet, dass** die Regelung des Öffnens und des Schließens der Blende (9) rechnergesteuert erfolgt.

20. Verfahren zur Regelung des Kammerdruckes von Koksofenkammern (1) einer Koksofenbatterie mit Hilfe von einstellbaren Blenden (9) an den Steigrohrkrümmermündungen (5a) in die Rohgasvorlage (6) nach einem der Ansprüche 16 bis 19, **dadurch gekennzeichnet, dass** der Deckel (16) des Steigrohres (4) oberhalb des Abzweiges des Krümmers (5) zum Öffnen der Koksofenkammertüren bei gleichzeitigem Schließen der Blende (9) temporär geöffnet wird.

21. Verfahren zur Regelung des Kammerdruckes von Koksofenkammern (1) einer Koksofenbatterie mit Hilfe von einstellbaren Blenden (9) an den Steigrohrkrümmermündungen (5a) in die Rohgasvorlage (6) nach einem der Ansprüche 16 bis 20, **dadurch gekennzeichnet, dass** der Deckel (16), der in dem Steigrohr (4) über dem Abzweig des Steigrohrkrümmers (5a) angeordnet ist, pneumatisch zu öffnen oder schließen ist.

22. Verfahren zur Regelung des Kammerdruckes von Koksofenkammern (1) einer Koksofenbatterie mit Hilfe von einstellbaren Blenden (9) an den Steigrohrkrümmermündungen (5a) in die Rohgasvorlage (6) nach einem der Ansprüche 16 bis 21, **dadurch gekennzeichnet, dass** der Regelmechanismus (10) für die Blenden (9) oder für den Deckel (16) mit einem Stickstoff enthaltenden Gas angetrieben wird.

23. Verfahren zur Regelung des Kammerdruckes von Koksofenkammern (1) einer Koksofenbatterie mit Hilfe von einstellbaren Blenden (9) an den Steigrohrkrümmermündungen (5a) in die Rohgasvorlage (6) nach einem der Ansprüche 16 bis 21, **dadurch gekennzeichnet, dass** der Regelmechanismus (10) für die Blenden (9) oder für den Deckel (16) mit einem Luft enthaltenden Gas angetrieben wird.

24. Verfahren zur Regelung des Kammerdruckes von Koksofenkammern (1) einer Koksofenbatterie mit Hilfe von einstellbaren Blenden (9) an den Steigrohrkrümmermündungen (5a) in die Rohgasvorlage (6) nach einem der Ansprüche 16 bis 23, **dadurch gekennzeichnet, dass** der Regelmechanismus (10) bei Ausfall des Antriebes in der letzten Regelstellung verharrt.

25. Verfahren zur Regelung des Kammerdruckes von Koksofenkammern (1) einer Koksofenbatterie mit Hilfe von einstellbaren Blenden (9) an den Steigrohrkrümmermündungen (5a) in die Rohgasvorlage (6) nach einem der Ansprüche 16 bis 24, **dadurch gekennzeichnet, dass** bei Ausfall des Antriebes der Regeleinrichtung (10) der Gasdruck in dem Gasraum (3) der Koksofenkammer (1) durch eine Veränderung des Unterdrucks in der Rohgasvorlage (6) geregelt wird.

## Claims

1. Device for regulating the chamber pressure of coke oven chambers (1) in a coke oven battery by means of adjustable diaphragms (9) at the standpipe gooseneck outlet openings (5a) to the crude gas collecting main (6), comprising
• a coke oven battery consisting of a number of coke oven chambers (1), wherein
• each individual coke oven chamber (1) can be gas-tightly sealed and is equipped with a standpipe (4) that is connected to a negative pressure-operated crude gas collecting main (6) via a gooseneck (5), and
• the standpipe (4) at the top end of the gooseneck (5) is provided with an opening and its closure (16) that can be opened and closed, and
• the gooseneck (5) is equipped with a liquid feed inlet (13) via which the standpipe (4) can be supplied at and/or downstream of the gooseneck (5) with a liquid (14b) running into the crude gas collecting main (6),
**said device being characterised in that**
• downstream of the gooseneck (5) the standpipe (4) opens into the crude gas collecting main (6) via an outlet section (8), and between the gooseneck (5) and the outlet section (8) there is a diaphragm (9) with an adjustable cross section which can be used to close off the gas and liquid flow and which is equipped with a device (10) for adjusting the cross section of the opening, with
• either the standpipe gooseneck (5) and the crude gas collecting main (6) being connected via a siphon (18) through which the liquid (14b) can drain even when the diaphragm (9) is closed, or
• the diaphragm (9) having a cross-sectional slit that leaves part of the diaphragm cross section open even on complete closure.

2. Device for regulating the chamber pressure of coke oven chambers (1) in a coke oven battery by means of adjustable diaphragms (9) at the standpipe gooseneck outlet openings (5a) to the crude gas collecting main (6) according to claim 1, **characterised in that** the opening with the closure (16) at the gooseneck (5) is a cover plate (16), that for closure is fitted to an opening at the top end above the gooseneck (5) branch and is equipped with a grasp (16a) for operation and a hinge (16b) at the gooseneck (5).

3. Device for regulating the chamber pressure of coke oven chambers (1) in a coke oven battery by means of adjustable diaphragms (9) at the standpipe gooseneck outlet openings (5a) to the crude gas collecting main (6) according to either of claims 1 or 2, **characterised in that** the diaphragm (9) consists of plates (9d, 9e) that can be closed horizontally in a concentric, tangential and circular manner towards the centre of the standpipe.

4. Device for regulating the chamber pressure of coke oven chambers (1) in a coke oven battery by means of adjustable diaphragms (9) at the standpipe gooseneck outlet openings (5a) to the crude gas collecting main (6) according to claim 3, **characterised in that** the plates (9) are fitted with pins (9f), all of which are mounted in a specially provided slotted opening of a ring (9f) positioned above so that the diaphragm (9) opens or closes when the ring (9f) moves.

5. Device for regulating the chamber pressure of coke oven chambers (1) in a coke oven battery by means of adjustable diaphragms (9) at the standpipe gooseneck outlet openings (5a) to the crude gas collecting main (6) according to either of claims 1 or 2, **characterised in that** the diaphragm (9) consists of plates (9d, 9e) that can be closed horizontally in a concentric, secantial and direct manner towards the centre of the standpipe.

6. Device for regulating the chamber pressure of coke oven chambers (1) in a coke oven battery by means of adjustable diaphragms (9) at the standpipe gooseneck outlet openings (5a) to the crude gas collecting main (6) according to claim 5, **characterised in that** the plates (9) are fitted with pins (9f), said pins (9f) being able to be pulled out of the gooseneck (5) by means of levers (10a) extending through the gooseneck wall to the outside so that the diaphragm (9) opens or closes when the lever (10a) is moved.

7. Device for regulating the chamber pressure of coke oven chambers (1) in a coke oven battery by means of adjustable diaphragms (9) at the standpipe gooseneck outlet openings (5a) to the crude gas collecting main (6) according to claim 1, **characterised in that** the diaphragm (9) consists of plates (9a, 9b) that are opened by being swung up or down in vertical direction.

8. Device for regulating the chamber pressure of coke oven chambers (1) in a coke oven battery by means of adjustable diaphragms (9) at the standpipe gooseneck outlet openings (5a) to the crude gas collecting main (6) according to claim 7, **characterised in that** the plates (9) are equipped with a circumferential wire (9c) that can be tightened or released by a transmission lever (10a), thus pulling the plates (9a,9b) up or letting them down and thereby opening or closing the diaphragm (9) in the gooseneck (5).

9. Device for regulating the chamber pressure of coke oven chambers (1) in a coke oven battery by means of adjustable diaphragms (9) at the standpipe gooseneck outlet openings (5a) to the crude gas collecting main (6) according to one of claims 1 to 8, **characterised in that** the diaphragm (9) can be adjusted by means of an electric regulating device (10).

10. Device for regulating the chamber pressure of coke oven chambers (1) in a coke oven battery by means of adjustable diaphragms (9) at the standpipe gooseneck outlet openings (5a) to the crude gas collecting main (6) according to one of claims 1 to 8, **characterised in that** the diaphragm (9) can be adjusted by means of a pneumatic regulating device (10).

11. Device for regulating the chamber pressure of coke oven chambers (1) in a coke oven battery by means of adjustable diaphragms (9) at the standpipe gooseneck outlet openings (5a) to the crude gas collecting main (6) according to one of claims 1 to 10, **characterised in that** the diaphragms (9) and the regulating device (10) are located in a gooseneck (5) pipe section that can be removed from the gooseneck (5).

12. Device for regulating the chamber pressure of coke oven chambers (1) in a coke oven battery by means of adjustable diaphragms (9) at the standpipe gooseneck outlet openings (5a) to the crude gas collecting main (6) according to claim 11, **characterised in that** the removable pipe section is to be flanged to the gooseneck (5).

13. Device for regulating the chamber pressure of coke oven chambers (1) in a coke oven battery by means of adjustable diaphragms (9) at the standpipe gooseneck outlet openings (5a) to the crude gas collecting main (6) according to one of claims 1 to 12, **characterised in that** the standpipe gooseneck (5) is equipped with a siphon (10) that runs through the middle of the standpipe gooseneck (5) and is enclosed by the diaphragm (9) when closed.

14. Device for regulating the chamber pressure of coke oven chambers (1) in a coke oven battery by means of adjustable diaphragms (9) at the standpipe gooseneck outlet openings to the crude gas collecting main (6) according to one of claims 1 to 12, **characterised in that** the standpipe gooseneck (5) is equipped with a siphon (18) that laterally passes the standpipe gooseneck (5) outside of the standpipe (4).

15. Device for regulating the chamber pressure of coke oven chambers (1) in a coke oven battery by means of adjustable diaphragms (9) at the standpipe gooseneck outlet openings to the crude gas collecting main (6) according to one of claims 1 to 14, **characterised in that** the gooseneck (5) pipe with the diaphragm (9) has a diameter of 0.25 m to 0.85 m measured at the point where the diaphragms are located but excluding said diaphragms.

16. Method for regulating the chamber pressure of coke oven chambers (1) in a coke oven battery by means of adjustable diaphragms (9) at the standpipe gooseneck outlet openings (5a) to the crude gas collecting main (6) according to one of claims 1 to 15, wherein
• coal (2) is coked in cycles in the coke oven chambers (1) of a coke oven battery, the cycles comprising charging, coking and pushing operations, and
• the gas pressure in the coke oven chamber (1) is regulated during the coking operation via a control device (9) at the end of the standpipe gooseneck (5) that transports the coking gas (15) from the gas space (3) of the coking chamber (1) to a negative pressure-operated crude gas collecting main (6), and
• the gooseneck (5) of the standpipe (4) out of the coke oven chamber is fed with a liquid stream (14a),
**said method being characterised in that**
• the gas pressure in the gas space (3) of the coke oven chamber (1) is regulated by a diaphragm (9) that changes the cross section of the standpipe gooseneck outlet (8), the cross section of the diaphragm (9) being able to be regulated by means of a regulating device (10), and
• when the diaphragm (9) is completely closed, the liquid from the standpipe gooseneck (5) discharges into the crude gas collecting main (6) either via a siphon (18) or via a slit in the diaphragm (9).

17. Method for regulating the chamber pressure of coke
oven chambers (1) in a coke oven battery by means of adjustable diaphragms (9) at the standpipe gooseneck outlet openings (5a) to the crude gas collecting main (6) according to claim 16, **characterised in that** the coke oven gas (15) flows into the standpipe gooseneck (5) at a temperature of 700°C to 1100°C and is cooled immediately by injecting liquid (14), with the remaining liquid (14) being discharged into the crude gas collecting main (6).

18. Method for regulating the chamber pressure of coke oven chambers (1) in a coke oven battery by means of adjustable diaphragms (9) at the standpipe gooseneck outlet openings (5a) to the crude gas collecting main (6) according to one of claims 16 or 17, **characterised in that** the diaphragm (9) is controlled as a function of the internal pressure of the coke oven chamber (1).

19. Method for regulating the chamber pressure of coke oven chambers (1) in a coke oven battery by means of adjustable diaphragms (9) at the standpipe gooseneck outlet openings (5a) to the crude gas collecting main (6) according to claim 18, **characterised in that** opening and closing of the diaphragm (9) is controlled by a computer.

20. Method for regulating the chamber pressure of coke oven chambers (1) in a coke oven battery by means of adjustable diaphragms (9) at the standpipe gooseneck outlet openings (5a) to the crude gas collecting main (6) according to one of claims 16 to 19, **characterised in that** the cover plate (16) of the standpipe(4) above the branch of the gooseneck (5) is temporarily opened while simultaneously closing the diaphragm (9) when the doors of the coke oven chamber are opened.

21. Method for regulating the chamber pressure of coke oven chambers (1) in a coke oven battery by means of adjustable diaphragms (9) at the standpipe gooseneck outlet openings (5a) to the crude gas collecting main (6) according to one of claims 16 to 20, **characterised in that** the cover plate (16) located in the standpipe (4) above the standpipe gooseneck (5) branch can be opened or closed pneumatically.

22. Method for regulating the chamber pressure of coke oven chambers (1) in a coke oven battery by means of adjustable diaphragms (9) at the standpipe gooseneck outlet openings (5a) to the crude gas collecting main (6) according to one of claims 16 to 21, **characterised in that** the regulating device (10) for the diaphragms (9) or for the cover plate (16) is powered by a nitrogen-containing gas.

23. Method for regulating the chamber pressure of coke oven chambers (1) in a coke oven battery by means of adjustable diaphragms (9) at the standpipe gooseneck outlet openings (5a) to the crude gas collecting main (6) according to one of claims 16 to 21, **characterised in that** the regulating device (10) for the diaphragms (9) or for the cover plate (16) is powered by an air-containing gas.

24. Method for regulating the chamber pressure of coke oven chambers (1) in a coke oven battery by means of adjustable diaphragms (9) at the standpipe gooseneck outlet openings (5a) to the gas collecting main (6) according to one of claims 16 to 23, **characterised in that** the regulating device (10) remains in the control position it was last in if the drive fails.

25. Method for regulating the chamber pressure of coke oven chambers (1) in a coke oven battery by means of adjustable diaphragms (9) at the standpipe gooseneck outlet openings (5a) to the crude gas collecting main (6) according to one of claims 16 to 24, **characterised in that** if the control mechanism (10) drive fails, the gas pressure in the gas space (3) of the coke oven chamber (1) is regulated by altering the negative pressure in the crude gas collecting main (6).

## Revendications

1. Dispositif de régulation de la pression de chambre de chambres de four à coke (1) d'une batterie de fours à coke à l'aide d'obturateurs réglables (9) disposés sur les bouches de raccords coudés (5a) de conduites montantes dans le collecteur de gaz brut (6), comprenant
• une batterie de fours à coke, qui se compose de plusieurs chambres de four à coke (1), dans lequel
• chaque chambre de four à coke individuelle (1) peut être fermée de façon étanche au gaz, et elle est munie d'une colonne montante (4), qui est raccordée par un raccord coudé (5) à un collecteur de gaz brut sous dépression (6), et
• la colonne montante (4) est dotée, à l'extrémité supérieure du raccord coudé (5), d'une ouverture et de son moyen de fermeture (16), qui doit être ouverte et fermée, et
• le raccord coudé (5) est équipé d'une arrivée de liquide (13), par laquelle la colonne montante (4) peut être munie au et/ou après le raccord coudé (5) d'un liquide (14b) circulant dans le collecteur de gaz brut (6),
**caractérisé en ce que**
• la colonne montante (4) débouche par une pièce de sortie (8) dans le collecteur de gaz brut (6) après le raccord coudé (5) dans la direction d'écoulement du gaz, et un obturateur de section transversale réglable (9) est placé entre le raccord coudé (5) et la pièce de sortie (8), au moyen duquel le courant de gaz et de liquide peut être coupé et qui est équipé d'un mécanisme (10) pour le réglage de la section transversale de l'ouverture, dans lequel
• soit le raccord coudé (5) de la colonne montante et le collecteur de gaz brut (6) sont reliés au moyen d'un siphon (18), par lequel une évacuation du liquide (14b) est possible même en cas de fermeture de l'obturateur (9),
• soit l'obturateur (9) comporte une découpe de section transversale qui, même en cas de fermeture complète, laisse ouverte une partie de la section transversale de l'obturateur.

2. Dispositif de régulation de la pression de chambre de chambres de four à coke (1) d'une batterie de fours à coke à l'aide d'obturateurs réglables (9) disposés sur les bouches de raccords coudés (5a) de conduites montantes dans le collecteur de gaz brut (6) selon la revendication 1, **caractérisé en ce que** l'ouverture avec le moyen de fermeture (16) sur le raccord coudé (5) est un couvercle (16), qui est posé pour la fermeture sur une ouverture sur l'extrémité supérieure au-dessus du branchement du raccord coudé (5), et qui est équipé d'une poignée (16a) pour le manoeuvrer et d'une suspension (16b) sur le raccord coudé (5).

3. Dispositif de régulation de la pression de chambre de chambres de four à coke (1) d'une batterie de fours à coke à l'aide d'obturateurs réglables (9) disposés sur les bouches de raccords coudés (5a) de conduites montantes dans le collecteur de gaz brut (6) selon une des revendications 1 ou 2, **caractérisé en ce que** l'obturateur (9) se compose de plaques (9d, 9e), qui peuvent être fermées de façon concentrique, tangentielle et circulaire horizontalement en direction du milieu de la colonne montante.

4. Dispositif de régulation de la pression de chambre de chambres de four à coke (1) d'une batterie de fours à coke à l'aide d'obturateurs réglables (9) disposés sur les bouches de raccords coudés (5a) de conduites montantes dans le collecteur de gaz brut (6) selon la revendication 3, **caractérisé en ce que** les plaques (9) sont munies de broches (9f), qui sont toutes montées dans une découpe prévue à cet effet dans un anneau (9f) disposé au-dessus de celles-ci, de telle manière que l'obturateur (9) s'ouvre et se ferme lors d'un mouvement de l'anneau (9f).

5. Dispositif de régulation de la pression de chambre de chambres de four à coke (1) d'une batterie de fours à coke à l'aide d'obturateurs réglables (9) disposés sur les bouches de raccords coudés (5a) de conduites montantes dans le collecteur de gaz brut (6) selon une des revendications 1 ou 2, **caractérisé en ce que** l'obturateur (9) se compose de plaques (9d, 9e), qui peuvent être fermées de façon concentrique, sécante et directe horizontalement en direction du milieu de la colonne montante.

6. Dispositif de régulation de la pression de chambre de chambres de four à coke (1) d'une batterie de fours à coke à l'aide d'obturateurs réglables (9) disposés sur les bouches de raccords coudés (5a) de conduites montantes dans le collecteur de gaz brut (6) selon la revendication 5, **caractérisé en ce que** les plaques (9) sont munies de broches (9f), dans lequel les broches (9f) peuvent être tirées hors du raccord coudé (5) avec des leviers (10a) menant vers l'extérieur à travers la paroi du raccord coudé, de telle manière que l'obturateur (9) s'ouvre et se ferme lors d'un mouvement du levier (10a).

7. Dispositif de régulation de la pression de chambre de chambres de four à coke (1) d'une batterie de fours à coke à l'aide d'obturateurs réglables (9) disposés sur les bouches de raccords coudés (5a) de conduites montantes dans le collecteur de gaz brut (6) selon la revendication 1, **caractérisé en ce que** l'obturateur (9) se compose de plaques (9a, 9b), qui pivotent en direction verticale vers le haut ou vers le bas pour l'ouverture.

8. Dispositif de régulation de la pression de chambre de chambres de four à coke (1) d'une batterie de fours à coke à l'aide d'obturateurs réglables (9) disposés sur les bouches de raccords coudés (5a) de conduites montantes dans le collecteur de gaz brut (6) selon la revendication 7, **caractérisé en ce que** les plaques (9) sont munies d'un fil périphérique (9c), qui peut être contracté ou détendu par un levier pour la transmission (10a), de telle manière que les plaques (9a, 9b) soient soulevées ou abaissées et que l'obturateur (9) s'ouvre ou se ferme ainsi dans le raccord coudé (5).

9. Dispositif de régulation de la pression de chambre de chambres de four à coke (1) d'une batterie de fours à coke à l'aide d'obturateurs réglables (9) disposés sur les bouches de raccords coudés (5a) de conduites montantes dans le collecteur de gaz brut (6) selon l'une quelconque des revendications 1 à 8, **caractérisé en ce que** l'obturateur (9) est réglable au moyen d'un mécanisme de réglage électrique (10).

10. Dispositif de régulation de la pression de chambre de chambres de four à coke (1) d'une batterie de fours à coke à l'aide d'obturateurs réglables (9) disposés sur les bouches de raccords coudés (5a) de conduites montantes dans le collecteur de gaz brut (6) selon l'une quelconque des revendications 1 à 8, **caractérisé en ce que** l'obturateur (9) est réglable au moyen d'un mécanisme de réglage pneumatique (10).

11. Dispositif de régulation de la pression de chambre de chambres de four à coke (1) d'une batterie de fours à coke à l'aide d'obturateurs réglables (9) disposés sur les bouches de raccords coudés (5a) de conduites montantes dans le collecteur de gaz brut (6) selon l'une quelconque des revendications 1 à 10, **caractérisé en ce que** les obturateurs (9) avec le mécanisme de réglage (10) sont disposés dans une section tubulaire du raccord coudé (5), qui peut être enlevée hors du raccord coudé (5).

12. Dispositif de régulation de la pression de chambre de chambres de four à coke (1) d'une batterie de fours à coke à l'aide d'obturateurs réglables (9) disposés sur les bouches de raccords coudés (5a) de conduites montantes dans le collecteur de gaz brut (6) selon la revendication 11, **caractérisé en ce que** la section tubulaire amovible doit être assemblée au raccord coudé (5) par des assemblages à brides.

13. Dispositif de régulation de la pression de chambre de chambres de four à coke (1) d'une batterie de fours à coke à l'aide d'obturateurs réglables (9) disposés sur les bouches de raccords coudés (5a) de conduites montantes dans le collecteur de gaz brut (6) selon l'une quelconque des revendications 1 à 12, **caractérisé en ce que** le raccord coudé (5) de la colonne montante est équipé d'un siphon (10), qui court au centre du raccord coudé (5) de colonne montante, et qui est fermé par l'obturateur (9) à l'état fermé.

14. Dispositif de régulation de la pression de chambre de chambres de four à coke (1) d'une batterie de fours à coke à l'aide d'obturateurs réglables (9) disposés sur les bouches de raccords coudés (5a) de conduites montantes dans le collecteur de gaz brut (6) selon l'une quelconque des revendications 1 à 12, **caractérisé en ce que** le raccord coudé (5) de la colonne montante est équipé d'un siphon (18), qui franchit latéralement le raccord coudé (5) de la colonne montante à l'extérieur de la colonne montante (4).

15. Dispositif de régulation de la pression de chambre de chambres de four à coke (1) d'une batterie de fours à coke à l'aide d'obturateurs réglables (9) disposés sur les bouches de raccords coudés (5a) de conduites montantes dans le collecteur de gaz brut (6) selon l'une quelconque des revendications 1 à 14, **caractérisé en ce que** le tube du raccord coudé (5) avec l'obturateur (9) présente, calculé à l'endroit des obturateurs, un diamètre sans obturateur de 0,25 m à 0,85 m.

16. Procédé de régulation de la pression de chambre de chambres de four à coke (1) d'une batterie de fours à coke à l'aide d'obturateurs réglables (9) disposés sur les bouches de raccords coudés (5a) de conduites montantes dans le collecteur de gaz brut (6) selon l'une quelconque des revendications 1 à 15, dans lequel
• on cokéfie de façon cyclique du charbon (2) dans les chambres de four à coke (1) d'une batterie de fours à coke, et les cycles se composent des opérations chargement - cokéfaction défournement, et
• pendant l'opération de cokéfaction, on régule la pression de gaz dans la chambre de four à coke (1) au moyen d'un organe de réglage (9) à l'extrémité du raccord coudé (5) de la colonne montante, qui transfère le gaz de cokéfaction (15) hors de la chambre à gaz (3) de la chambre de cokéfaction (1) dans un collecteur de gaz brut sous dépression (6), et
• on munit le raccord coudé (5) de la colonne montante (4) menant à la sortie de la chambre de cokéfaction d'un courant de liquide (14a),
**caractérisé en ce que**
• on régule la pression de gaz dans la chambre à gaz (3) de la chambre de four à coke (1) au moyen d'un obturateur (9), qui modifie la section transversale de la sortie (8) du raccord coudé de la colonne montante, dans lequel la section transversale de l'obturateur (9) est réglable au moyen d'un mécanisme de réglage (10), et
• le liquide s'écoule hors du raccord coudé (5) de la colonne montante dans le collecteur de gaz brut (6), lorsque l'obturateur (9) est complètement fermé, soit par un siphon (18) soit par une ouverture découpée dans l'obturateur (9).

17. Procédé de régulation de la pression de chambre de chambres de four à coke (1) d'une batterie de fours à coke à l'aide d'obturateurs réglables (9) disposés sur les bouches de raccords coudés (5a) de conduites montantes dans le collecteur de gaz brut (6) selon la revendication 16, **caractérisé en ce que** le gaz de four à coke (15) pénètre dans le raccord coudé (5) de la colonne montante avec une température de 700 à 1100°C et est immédiatement refroidi par la pulvérisation de liquide (14), et le liquide restant (14) est évacué dans le collecteur de gaz brut (6).

18. Procédé de régulation de la pression de chambre de chambres de four à coke (1) d'une batterie de fours à coke à l'aide d'obturateurs réglables (9) disposés sur les bouches de raccords coudés (5a) de conduites montantes dans le collecteur de gaz brut (6) selon une des revendications 16 ou 17, **caractérisé en ce que** l'on régule l'obturateur (9) en fonction de la pression intérieure de la chambre de four à coke (1).

19. Procédé de régulation de la pression de chambre de chambres de four à coke (1) d'une batterie de fours à coke à l'aide d'obturateurs réglables (9) disposés sur les bouches de raccords coudés (5a) de conduites montantes dans le collecteur de gaz brut (6) selon la revendication 18, **caractérisé en ce que** l'on effectue la régulation de l'ouverture et de la fermeture de l'obturateur (9) sous la commande d'un ordinateur.

20. Procédé de régulation de la pression de chambre de chambres de four à coke (1) d'une batterie de fours à coke à l'aide d'obturateurs réglables (9) disposés sur les bouches de raccords coudés (5a) de conduites montantes dans le collecteur de gaz brut (6) selon l'une quelconque des revendications 16 à 19, **caractérisé en ce que** l'on ouvre temporairement le couvercle (16) de la colonne montante (4) au-dessus du branchement du raccord coudé (5) pour l'ouverture des portes de la chambre de four à coke pendant la fermeture simultanée de l'obturateur (9).

21. Procédé de régulation de la pression de chambre de chambres de four à coke (1) d'une batterie de fours à coke à l'aide d'obturateurs réglables (9) disposés sur les bouches de raccords coudés (5a) de conduites montantes dans le collecteur de gaz brut (6) selon l'une quelconque des revendications 16 à 20, **caractérisé en ce que** le couvercle (16), qui est disposé dans la colonne montante (4) au-dessus du branchement du raccord coudé (5) de la colonne montante, doit s'ouvrir ou se fermer par voie pneumatique.

22. Procédé de régulation de la pression de chambre de chambres de four à coke (1) d'une batterie de fours à coke à l'aide d'obturateurs réglables (9) disposés sur les bouches de raccords coudés (5a) de conduites montantes dans le collecteur de gaz brut (6) selon l'une quelconque des revendications 16 à 21, **caractérisé en ce que** le mécanisme de réglage (10) pour les obturateurs (9) ou pour le couvercle (16) est entraîné avec un gaz contenant de l'azote.

23. Procédé de régulation de la pression de chambre de chambres de four à coke (1) d'une batterie de fours à coke à l'aide d'obturateurs réglables (9) disposés sur les bouches de raccords coudés (5a) de conduites montantes dans le collecteur de gaz brut (6) selon l'une quelconque des revendications 16 à 21, **caractérisé en ce que** le mécanisme de réglage (10) pour les obturateurs (9) ou pour le couvercle (16) est entraîné avec un gaz contenant de l'air.

24. Procédé de régulation de la pression de chambre de chambres de four à coke (1) d'une batterie de fours à coke à l'aide d'obturateurs réglables (9) disposés sur les bouches de raccords coudés (5a) de conduites montantes dans le collecteur de gaz brut (6) selon l'une quelconque des revendications 16 à 23, **caractérisé en ce que** le mécanisme de réglage (10) est immobilisé dans la dernière position de réglage en cas de panne de l'entraînement.

25. Procédé de régulation de la pression de chambre de chambres de four à coke (1) d'une batterie de fours à coke à l'aide d'obturateurs réglables (9) disposés sur les bouches de raccords coudés (5a) de conduites montantes dans le collecteur de gaz brut (6) selon l'une quelconque des revendications 16 à 24, **caractérisé en ce que**, en cas de panne de l'entraînement du dispositif de réglage (10), on régule la pression de gaz dans la chambre à gaz (3) de la chambre de four à coke (1) par une variation de la dépression dans le collecteur de gaz brut (6).
